# EUROPÄISCHE PATENTSCHRIFT

(11) **EP 4 073 352 B1**
(45) Veröffentlichungstag und Bekanntmachung des Hinweises auf die Patenterteilung: **28.02.2024**
(21) Anmeldenummer: 20838891.8
(22) Anmeldetag: 07.12.2020
(51) Int. Cl.: F01D 5/30, F01D 11/00, F01D 25/12

(54) **ROTOR FÜR EINE STRÖMUNGSMASCHINE UND STRÖMUNGSMASCHINE**
ROTOR FOR A TURBOMACHINE AND TURBOMACHINE
ROTEUR POUR UNE TURBOMACHINE ET TURBOMACHINE

(30) Priorität: 12.12.2019 DE 102019219403
(43) Veröffentlichungstag der Anmeldung: 19.10.2022
(73) Patentinhaber: MTU Aero Engines AG, 80995 München (DE)
(72) Erfinder: PERNLEITNER, Martin, 80995 München (DE); FRENO, Dieter, 80995 München (DE); DOPFER, Manfred, 80995 München (DE); HUMMEL, Tino, 80995 München (DE); WITTIG, Klaus, 80995 München (DE)
(86) Internationale Anmeldenummer: PCT/DE2020/000313
(87) Internationale Veröffentlichungsnummer: WO 2021/115510

(56) Entgegenhaltungen:
- EP-A1- 2 546 465
- DE-T2- 69 025 456
- JP-A- 2002 106 302
- US-A1- 2016 084 260
- US-A1- 2016 146 016

## Beschreibung

Die Erfindung betrifft einen Rotor für eine Strömungsmaschine gemäß dem Oberbegriff von Patentanspruch 1. Ein weiterer Aspekt der Erfindung betrifft eine Strömungsmaschine mit wenigstens einem solchen Rotor.

Bei aus dem Stand der Technik bekannten Rotoren für Strömungsmaschinen werden häufig jeweilige Schaufeln der Rotoren formschlüssig mit einem Rotorgrundkörper, welcher auch als Scheibe bezeichnet werden kann, verbunden. Hierzu erfolgt eine formschlüssige Verbindung zwischen einem jeweiligen Schaufelfuß der jeweiligen Schaufeln und dem Rotorgrundkörper, indem der Schaufelfuß in eine zu dessen Aufnahme vorgesehene Ausnehmung des Rotorgrundkörpers unter Ausbildung eines Formschlusses eingeführt wird. Die Schaufelfüße können beispielsweise tannenbaumartig profiliert sein, und formschlüssig in der beispielsweise ebenfalls tannenbaumartig geformten Ausnehmung des Rotorgrundkörpers gehalten werden. Über einen Spalt, welcher sich bei der formschlüssigen Verbindung zwischen dem Schaufelfuß und dem Rotorgrundkörpers erstrecken kann, kann bei Bedarf ein Kühlmedium, beispielsweise Kühlluft, geführt werden um eine unzulässige thermische Belastung im Bereich der formschlüssig Verbindung zwischen Schaufelfuß und Rotorgrundkörper beim bestimmungsgemäßen Gebrauch des Rotors in der Strömungsmaschine zu vermeiden. Für den Fall, dass beispielsweise ein Durchströmen des Spaltes mit dem Kühlmedium nicht benötigt wird oder beispielsweise das Kühlmedium durch Aufheizung an der Verbindung, welche auch als Schaufel-Scheibe-Verbindung bezeichnet werden kann, zu heiß wird, ist es sinnvoll den Spalt nach Möglichkeit abzudichten, also eine sich zwischen dem Schaufelfuß und dem Rotorgrundkörper erstreckende Spaltbreite des Spaltes zu minimieren. Um zu vermeiden, dass Spannungen in einem Kerbgrund des Schaufelfußes beim bestimmungsgemäßen Gebrauch des Rotors auf einen unzulässigen Wert ansteigen, wird der Schaufelfuß häufig mit besonders großen Radien versehen, um dadurch einen Kerbfaktor zu reduzieren. Dies wiederum kann jedoch dazu führen, dass der Spalt vergrößert wird, die Spaltbreite zunimmt, und dementsprechend eine Leckage über den Spalt ansteigt.

Aus der US 2016 /0146016 A1 sind beispielsweise ein System und Verfahren zum Kühlen einer radial äußeren Oberfläche einer Rotorscheibenstütze eines Turbinenrads und eines Rotorraums zwischen einer Turbinenschaufel und der Rotorscheibenstütze bekannt. Die Turbinenschaufel umfasst mindestens einen Kühlmitteldurchlass, der sich zwischen einem inneren Kühlkanal und einer äußeren Oberfläche eines Schaftabschnitts der Turbinenschaufel erstreckt, die direkt einer radial oberen Fläche der Rotorscheibenstütze zugewandt ist, wobei der Kühlmitteldurchlass verwendet wird um einen Kühlstrom in Richtung der radial oberen Fläche der Rotorscheibenstützte zu führen.

Beispiele für Schaufelfuß-Scheibe-Verbindungen sind aus den Dokumenten JP2002106302A, US20160084260A1, DE69025456T2, EP2546465A1, US20160146016A1 bekannt.

Aufgabe der vorliegenden Erfindung ist es, einen Rotor sowie eine Strömungsmaschine der eingangs genannten Art zu schaffen, bei welchen Spannungen im Kerbgrund eines Schaufelfußes ebenso wie eine Leckage über einen Spalt zwischen Schaufelfuß und Rotorgrundkörper verringert werden können.

Diese Aufgabe wird erfindungsgemäß durch einen Rotor mit den Merkmalen des Patentanspruchs 1 sowie durch eine Strömungsmaschine mit den Merkmalen des Patentanspruchs 11 gelöst. Vorteilhafte Ausgestaltungen mit zweckmäßigen Weiterbildungen der Erfindung sind in den Unteransprüchen angegeben.

Ein erster Aspekt der Erfindung betrifft einen Rotor für eine Strömungsmaschine, mit zumindest einer Schaufel und mit wenigstens einem Rotorgrundkörper, welcher zumindest eine Ausnehmung aufweist, in welcher ein Schaufelfuß der zumindest einen Schaufel formschlüssig aufgenommen ist, wobei der Schaufelfuß zumindest eine Vertiefung umfasst, in welcher wenigstens ein, die zumindest eine Ausnehmung bereichsweise begrenzender Vorsprung des wenigstens einen Rotorgrundkörpers aufgenommen ist, wobei die zumindest eine Vertiefung durch eine schaufelfußseitige, erste Begrenzungsfläche und der wenigstens eine Vorsprung durch eine rotorgrundkörperseitige, zweite Begrenzungsfläche begrenzt ist. Der Vorsprung kann auch als Nocken, insbesondere Scheibennocken, bezeichnet werden. Der Rotorgrundkörper kann auch als Scheibe bezeichnet werden. Die Vertiefung kann an eine Erhebung des Schaufelfußes anschließen. Die Vertiefung und die Erhebung können beispielsweise jeweilige Bereiche einer Tannenbaum-Verzahnung des Schaufelfußes ausbilden. Die erste Begrenzungsfläche kann ausschließlich die zumindest eine Vertiefung begrenzen. Die zweite Begrenzungsfläche kann ausschließlich den wenigstens einen Vorsprung begrenzen.

Gemäß der Erfindung ist vorgesehen, dass zumindest die erste Begrenzungsfläche wenigstens eine Erhöhung aufweist, welche einen zwischen der ersten Begrenzungsfläche und der zweiten Begrenzungsfläche verlaufenden Spalt zumindest bereichsweise verengt. Dies ist von Vorteil, da es die Erhöhung einerseits ermöglicht, beispielsweise einen neben der Erhöhung angeordneten Flächenbereich der ersten Begrenzungsfläche beispielsweise mit einem besonders großen Radius zu versehen, wodurch beim bestimmungsgemäßen Gebrauch des Rotors etwaige Spannungen im Schaufelfuß, insbesondere in einem Kerbgrund des Schaufelfußes, verringert werden können, und andererseits durch die Erhöhung eine Verengung des Spaltes und damit eine Verringerung einer Leckage beispielsweise von durch den Spalt geführter Kühlluft erfolgen kann. Die erste Begrenzungsfläche kann auch als erste Freifläche oder als schaufelfußseitige Freifläche bezeichnet werden. Die zweite Begrenzungsfläche kann auch als zweite Freifläche oder als rotorgrundkörperseitige Freifläche bezeichnet werden.

Die Erhöhung kann bevorzugt als Unstetigkeit ausgebildet sein. Die Unstetigkeit kann dann beispielsweise als Knick ausgestaltet sein. Die wenigstens eine Unstetigkeit kann also mit anderen Worten knickförmig ausgebildet sein. Bei aus dem Stand der Technik bekannten Rotorkörpern wird auf einen stetigen Übergang, also auf eine Stetigkeit zwischen unterschiedlichen Flächenbereichen an einem Schaufelfußbereich geachtet, also Unstetigkeiten vermieden. Bei diesen bekannten Rotorkörpern wird die Stetigkeit sichergestellt, indem beispielsweise kleine Krümmungsradien der Flächenbereiche vorgesehen werden, wodurch erhöhte Spannungen im Kerbgrund auftreten können. Der Erfindung liegt hingegen die Erkenntnis zugrunde, dass durch die wenigstens eine Erhöhung, welche als Unstetigkeit ausgebildet sein kann, eine erhöhte Flexibilität beispielsweise bei der Ausgestaltung der ersten Begrenzungsfläche besteht, sodass der neben der Erhöhung angeordnete Flächenbereich mit einem besonders großen Radius versehen sein kann, um dadurch eine Kerbwirkung, und damit Spannungen im Kerbgrund des Schaufelfußes beim bestimmungsgemäßen Gebrauch des Rotors zu verringern. Gleichzeitig dient die wenigstens eine Erhöhung der Verengung des Spaltes zwischen dem Schaufelfuß und dem Rotorgrundkörper, durch welche eine etwaige Leckage verringert werden kann.

Die wenigstens eine Erhöhung der ersten Begrenzungsfläche kann auch als schaufelfußseitige Erhöhung bezeichnet werden.

Es ist prinzipiell auch denkbar, dass zusätzlich die zweite Begrenzungsfläche wenigstens eine Erhöhung aufweist. Diese Erhöhung kann auch als rotorgrundkörperseitige Erhöhung bezeichnet werden. Vorzugsweise kann die schaufelfußseitige Erhöhung und/oder die rotorgrundkörperseitige Erhöhung als jeweilige Unstetigkeit ausgebildet sein. Die jeweilige Unstetigkeit kann vorzugsweise als Kante ausgebildet sein, welche sich in Längserstreckungsrichtung des Rotors und damit des Schaufelfußes und des Rotorgrundkörpers erstrecken kann. Durch die Ausgestaltung als Kante kann eine gleichmäßige und wirksame Verringerung der Leckage über einen besonders großen Bereich in Längserstreckungsrichtung erfolgen. Durch die gleichmäßige Verringerung der Leckage können beispielsweise im Schaufelfuß temperaturbedingte Spannungsunterschiede in Längserstreckungsrichtung zumindest im Wesentlichen vermieden werden.

Vorzugsweise kann vorgesehen sein, dass die erste Begrenzungsfläche an der wenigstens einen Erhöhung abdichtend an der zweiten Begrenzungsfläche anliegt. Mit anderen Worten kann der Schaufelfuß an der wenigstens einen Erhöhung abdichtend an dem Rotorgrundkörper abgestützt sein. Dadurch kann die Leckage in vorteilhafter Weise minimiert werden.

In einer vorteilhaften Weiterbildung der Erfindung grenzt die wenigstens eine Erhöhung unmittelbar an einen ersten ebenen Flächenbereich der ersten Begrenzungsfläche an. Dies ist von Vorteil, da die wenigstens eine Erhöhung hierdurch besonders gezielt ausgestaltet werden kann. So kann die wenigstens eine Erhöhung bei der Herstellung des Schaufelfußes ausgestaltet werden, indem der erste ebene Flächenbereich durch Spanen erzeugt wird. Die wenigstens eine Erhöhung kann also durch Erzeugen des ersten ebenen Flächenbereichs aufwandsarm mit hergestellt werden.

Die Erhöhung ist innerhalb einer nicht-tragenden Flanke des Schaufelfußes gebildet und kann insbesondere auf eine nach radial außen weisende Flanke des Vorsprung des Rotorgrundkörpers weisen.

In einer weiteren vorteilhaften Weiterbildung der Erfindung ist die wenigstens eine Erhöhung zwischen dem ersten ebenen Flächenbereich und einem zweiten ebenen Flächenbereich der ersten Begrenzungsfläche angeordnet. Dies ist von Vorteil, da hierdurch eine besonders exakte Positionierung der wenigstens einen Erhöhung anhand der beiden ebenen Flächenbereiche, also anhand des ersten ebenen Flächenbereichs und des zweiten ebenen Flächenbereich erfolgen kann. Die beiden ebenen Flächenbereiche können durch Spanen, also durch Materialabtrag eines Materials, aus welchem der Schaufelfuß gebildet ist, erzeugt und dadurch die wenigstens eine Erhöhung aufwandsarm infolge der Herstellung der Flächenbereiche ausgebildet werden. Die wenigstens eine Erhöhung kann insbesondere unmittelbar zwischen dem ersten ebenen Flächenbereich und dem zweiten ebenen Flächenbereich angeordnet und dadurch besonders definiert ausgestaltet sein. Die wenigstens eine Erhöhung kann also unmittelbar einerseits an den ersten ebenen Flächenbereich und andererseits an den zweiten ebenen Flächenbereich angrenzen. Dadurch kann die wenigstens eine Erhöhung den ersten ebenen Flächenbereich und den zweiten ebenen Flächenbereich verbinden.

In einer weiteren vorteilhaften Weiterbildung der Erfindung ist die wenigstens eine Erhöhung zwischen einem verrundeten Flächenbereich der ersten Begrenzungsfläche und dem ersten ebenen Flächenbereich angeordnet. Dies ist von Vorteil, da der verrundete Flächenbereich zur Verringerung von Kerbspannungen im Schaufelfuß beitragen kann. Die wenigstens eine Erhöhung kann bevorzugt unmittelbar zwischen dem verrundeten Flächenbereich und dem ersten ebenen Flächenbereich angeordnet sein, und dadurch den verrundeten Flächenbereich und den ersten ebenen Flächenbereich miteinander verbinden. Der verrundete Flächenbereich kann einen geringeren Abstand zu einer Mittelebene des Schaufelfußes aufweisen, als der erste ebene Flächenbereich, wodurch die Verringerung der Kerbspannungen in vorteilhafter Weise im Bereich der Mittelebene erfolgen kann. Der verrundete Flächenbereich kann als Mulde, insbesondere als verrundete Rille ausgebildet sein. Der verrundete Flächenbereich kann sich in Längserstreckungsrichtung des Rotors entlang des Schaufelfußes erstrecken. Die Längserstreckungsrichtung kann auch als Axialrichtung bezeichnet werden. Die Längserstreckungsrichtung (Axialrichtung) verläuft bevorzugt parallel zu einer Drehachse des Rotorgrundkörpers bei dessen bestimmungsgemäßem Gebrauch. Der Rotor kann beispielsweise als Turbinenrad ausgestaltet sein und bei dessen bestimmungsgemäßem Gebrauch um die Drehachse sowie in einem Gehäuse der Strömungsmaschine rotieren.

In einer weiteren vorteilhaften Weiterbildung der Erfindung schließt der zweite ebene Flächenbereich einen Winkel mit einem, der zweiten Begrenzungsfläche zugeordneten, dritten ebenen Flächenbereich ein, wobei der dritte ebene Flächenbereich zusammen mit dem ersten ebenen Flächenbereich einen Spaltabschnitt des Spaltes begrenzt. Dies ist von Vorteil, da durch den Winkel unzulässig hohe Kerbspannungen vermieden werden können und der Winkel eine größere Anzahl an Freiheitsgraden bei der Ausgestaltung des Schaufelfußes sowie des Rotorgrundkörpers ermöglicht. Der erste ebene Flächenbereich und der dritte ebene Flächenbereich können in Hocherstreckungsrichtung des Rotors und damit auch des Rotorgrundkörpers, der Schaufel und des Schaufelfußes übereinander angeordnet sein. Die Hocherstreckungsrichtung kann auch als Radialerstreckungsrichtung bezeichnet werden. Der erste ebene Flächenbereich und der dritte ebene Flächenbereich können sich in Hocherstreckungsrichtung überlappen, insbesondere vollständig überlappen. Darüber hinaus können der erste ebene Flächenbereich und der dritte ebene Flächenbereich parallel zueinander orientiert sein.

In einer weiteren vorteilhaften Weiterbildung der Erfindung ist der zweite ebene Flächenbereich senkrecht zu einer parallel zu einer Hocherstreckungsrichtung des Schaufelfußes verlaufenden Mittelebene des Schaufelfußes orientiert. Dies ist von Vorteil, da hierdurch eine vereinfachte Ausrichtung und definierte Positionierung der wenigstens einen Erhöhung über den zweiten ebenen Flächenbereich erfolgen kann. Entlang der Hocherstreckungsrichtung kann eine Schaufelbezugsachse der Schaufel sowie des Schaufelfußes verlaufen.

In einer weiteren vorteilhaften Weiterbildung der Erfindung weist die wenigstens eine Erhöhung eine Kantenverrundung auf. Dies ist von Vorteil, da hierdurch ein etwaiges verschleiß förderndes Kantentragen an einer Spitze der wenigstens einen Erhöhung vermieden werden kann.

In einer Ausführung umfasst im Betrieb des Rotors der Spalt innerhalb der Vertiefung einen ersten und einen zweiten Spaltabschnitt, die bei der Erhöhung aneinander angrenzen. Dabei verläuft erste Spaltabschnitt vorzugsweise ausgehend von der Erhöhung mit einer Spaltbreite um einen Scheitel des Vorsprungs herum, wobei die Spaltbreite zunächst monoton, insbesondere streng monoton, bis zu einer lokal maximalen Spaltbreite zunimmt und dann monoton, insbesondere streng monoton, insbesondere bis auf Null, abnimmt. Dadurch kann eine Kerbspannung bei gleichzeitig gering bleibender Leckage durch den Spalt effektiv verringert werden.

Zusätzlich oder alternativ kann der zweite Spaltabschnitt ausgehend von der Erhöhung zumindest in einem an die Erhöhung angrenzenden Bereich mit konstanter Spaltbreite, insbesondere linear, verlaufen.

Vorzugsweise ist die lokal maximale Spaltbreite zwischen dem Scheitel und der der Erhöhung angeordnet.

In einer vorteilhaften Ausführung ist die zumindest eine Vertiefung eine radial äußerste Vertiefung eines tannenbaumartig profilierten Schaufelfußes ist. Die Erhöhung kann damit gegenüber von einem, insbesondere linear verlaufenden, Dachabschnitt eines Scheibennockens angeordnet sein.

In einigen Ausführungen ist zusätzlich oder alternativ zumindest eine der zumindest einen Vertiefung eine radial zweitäußerste Vertiefung eines tannenbaumartig profilierten Schaufelfußes. Je weiter radial außen die Vertiefung mit der Erhöhung angeordnet ist, desto größer ist der Schaufelfußquerschnitt an der lokalen Engstelle im Bereich der Vertiefung und desto geringer ist eine Beeinträchtigung durch eine Verringerung der Engstellenquerschnitts durch die vorliegende Erfindung.

Ein zweiter Aspekt der Erfindung betrifft eine Strömungsmaschine mit wenigstens einem Rotor gemäß dem ersten Aspekt der Erfindung. Die Strömungsmaschine kann beispielsweise als Strahltriebwerk ausgestaltet sein. Die im Zusammenhang mit dem erfindungsgemäßen Rotor gemäß dem ersten Aspekt der Erfindung vorgestellten Merkmale sowie deren Vorteile gelten entsprechend für die erfindungsgemäße Strömungsmaschine gemäß dem zweiten Aspekt der Erfindung und umgekehrt.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Schnittdarstellung eines Teilbereichs eines Rotors, welcher einen Rotorgrundkörper mit einer Ausnehmung aufweist, in welche ein Schaufelfuß einer Schaufel formschlüssig aufgenommen ist;
- Fig. 2: eine vergrößere Detailansicht eines in Fig. 1 umrahmten Bereichs A; und
- Fig. 3: eine weitere vergrößerte Detailansicht einer Variante des Rotors.

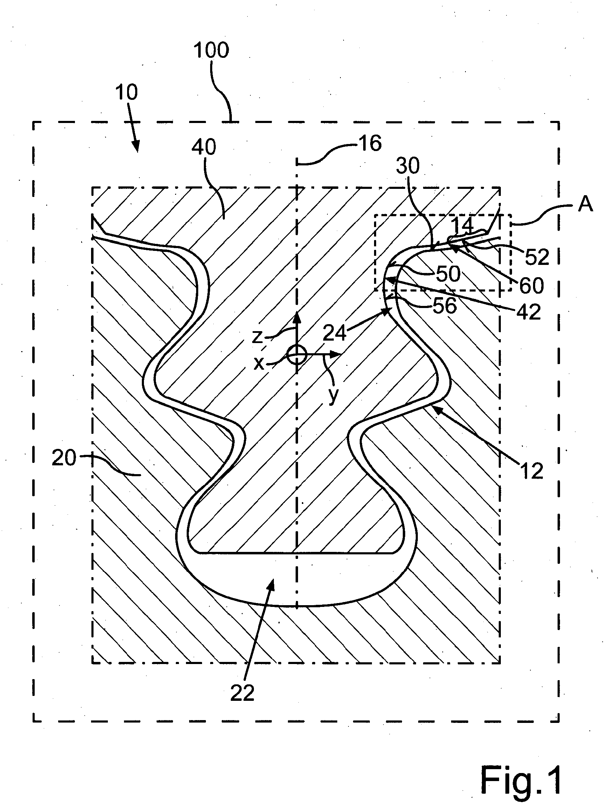

**FIG. 1** zeigt in einer schematischen Schnittdarstellung einen Teilbereich einer Strömungsmaschine 100 mit einem ebenfalls schematisch und ausschnittsweise gezeigten Rotor 10.

Der Rotor 10 umfasst eine Vielzahl an Schaufeln, wobei vorliegend aus Gründen der Übersichtlichkeit lediglich ein Schaufelfuß 40 einer der Schaufeln erkennbar ist.

Der Rotor 10 umfasst zudem einen Rotorgrundkörper 20, welcher auch als Scheibe bezeichnet werden kann. Der Rotorgrundkörper 20 weist eine Vielzahl an Ausnehmungen zur Aufnahme jeweiliger Schaufelfüße der jeweiligen Schaufeln auf. Von diesen Ausnehmungen ist vorliegend aus Gründen der Übersichtlichkeit lediglich eine Ausnehmung 22 gezeigt, in welcher der Schaufelfuß 40 formschlüssig aufgenommen ist.

In Fig. 1 ist - ebenso wie in den weiteren Figuren - ein auf den Rotor 10 bezogenes Koordinatensystem angegeben, welches durch eine Längserstreckungsrichtung x, durch eine Umfangs- oder Quererstreckungsrichtung y und einer Radial- oder Hocherstreckungsrichtung z des Rotors 10 definiert ist. Die Längserstreckungsrichtung x kann auch als Axialrichtung bezeichnet werden, und verläuft parallel zu einer hier nicht weiter gezeigten Drehachse des Rotors 10 und damit auch des Rotorgrundkörpers 20.

Der Schaufelfuß 40 umfasst eine Vertiefung 42, in welcher ein, die Ausnehmung 22 bereichsweise begrenzender Vorsprung 24 des Rotorgrundkörpers 20 aufgenommen ist. Die Vertiefung 42 kann dabei Teil einer in Fig. 1 erkennbaren Tannenbaum-Verzahnung des Schaufelfußes 40 sein. Der Vorsprung 24 des Rotorgrundkörpers 20 ist dabei Teil einer die Ausnehmung 22 begrenzenden Kontur des Rotorgrundkörpers 20, wobei die Kontur vorliegend analog zur Tannenbaum-Verzahnung geformt ist, wie ebenfalls Fig. 1 zu entnehmen ist.

Die Vertiefung 42 ist durch eine schaufelfußseitige, erste Begrenzungsfläche 50 begrenzt. Der Vorsprung 24 ist hingegen durch eine rotorgrundkörperseitige, zweite Begrenzungsfläche 30 begrenzt. Die Begrenzungsflächen 30, 50 erstrecken sich vorliegend in Längserstreckungsrichtung x, weshalb die Begrenzungsflächen 30, 50 in den Figuren lediglich als jeweilige Linien und/oder als Geradenstücke dargestellt sind.

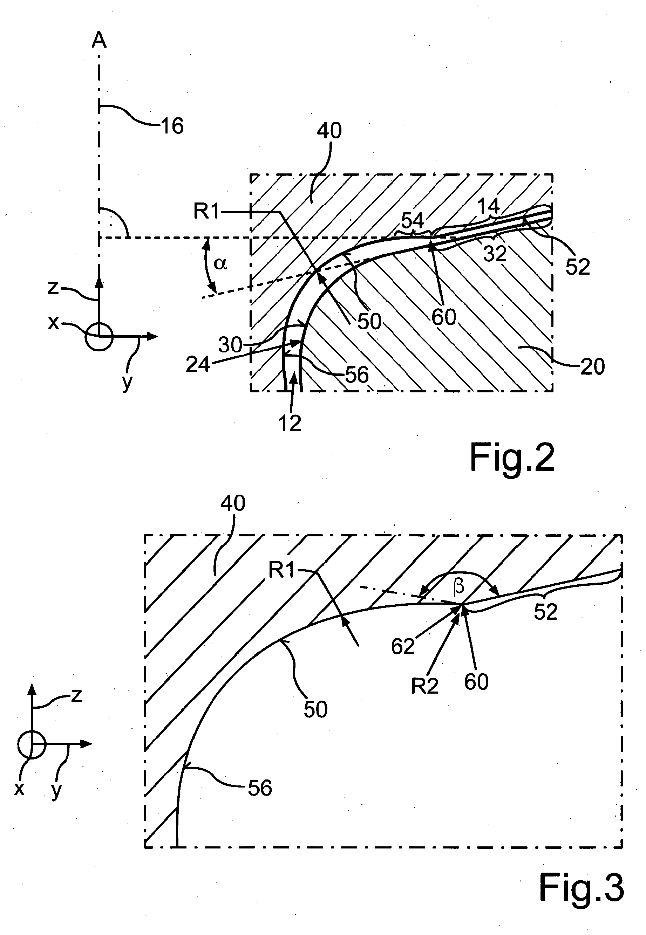

Die erste Begrenzungsfläche 50 weist eine Erhöhung 60 auf, welche einen zwischen der ersten Begrenzungsfläche 50 und der zweiten Begrenzungsfläche 30 verlaufenden Spalt 12 bereichsweise verengt, wie besonders deutlich in **Fig. 2** und **Fig. 3** erkennbar ist. Die Erhöhung 60 kann, wie vorliegend gezeigt, insbesondere als Unstetigkeit ausgebildet sein. Die Erhöhung 60 ist an der vorliegend, in Hocherstreckungsrichtung z obersten Vertiefung 42 des Schaufelfußes 40 angeordnet. Die Erhöhung 60 ist dabei an einem sogenannten "Dead-Rim" angeordnet. Dieser "Dead-Rim" kann auch als "Totrand" bezeichnet werden. Der "Totrand" bezeichnet einen in Hocherstreckungsrichtung z obersten Bereich der formschlüssigen Verbindung aus dem Schaufelfuß 40 und dem Rotorgrundkörper 20, welche auch als Schaufelfuß-Rotorgrundkörper-Verbindung bezeichnet werden kann.

Der Schaufelfuß 40 kann symmetrisch zu einer durch die Längserstreckungsrichtung x und die Hocherstreckungsrichtung z aufgespannten Mittelebene 16 des Schaufelfußes 40 ausgebildet sein, was vorliegend aus Gründen der Übersichtlichkeit nicht näher gezeigt ist.

Die Erhöhung 60 grenzt unmittelbar an einen ersten ebenen Flächenbereich 52 der ersten Begrenzungsfläche 50 an.

Fig. 2 zeigt in einer vergrößerten Darstellung eines in Fig. 1 umrahmten Bereichs A, dass die Erhöhung 60 zwischen dem ersten ebenen Flächenbereich 52 und einem zweiten ebenen Flächenbereich 54 der ersten Begrenzungsfläche 50 angeordnet sein kann. Die Flächenbereiche 52, 54 können zueinander geneigt sein, wie Fig. 2 zu entnehmen ist.

Zudem ist die Erhöhung 60 zwischen einem verrundeten Flächenbereich 56 der ersten Begrenzungsfläche 50 und dem ersten ebenen Flächenbereich 52 angeordnet. Die Erhöhung 60 kann ebenso wie der zweite ebene Flächenbereich 54 in Quererstreckungsrichtung y zwischen dem ersten ebenen Flächenbereich 52 und dem verrundeten Flächenbereich 56 angeordnet sein, wie in Fig. 2 erkennbar ist. Die vorliegend als Knick ausgebildete Erhöhung 60 dient zur Verringerung einer Leckage durch den Spalt 12 hindurch, ohne dass infolge der Verringerung der Leckage ein aus Gründen der Übersichtlichkeit lediglich in Fig. 3 gezeigter Radius R1 des verrundeten Flächenbereichs 56 verändert, insbesondere verkleinert, oder kompromittiert werden müsste.

Der zweite ebene Flächenbereich 54 kann einen Winkel α mit einem, der zweiten Begrenzungsfläche 30 zugeordneten, dritten ebenen Flächenbereich 32 einschließen, wie exemplarisch in Fig. 2 gezeigt ist, wobei der dritte ebene Flächenbereich 32 zusammen mit dem ersten ebenen Flächenbereich 52 einen Spaltabschnitt 14 des Spaltes 12 begrenzt. Der Winkel α kann theoretisch maximal so groß sein, dass der erste ebene Flächenbereich 52 auf einen Wert von "0" verringert wird. Der erste ebene Flächenbereich 52 und der dritte ebene Flächenbereich 32 sind vorliegend in Hocherstreckungsrichtung z übereinander angeordnet. Der erste ebene Flächenbereich 52 und der dritte ebene Flächenbereich 32 können vorzugsweise parallel zueinander orientiert sein, wie in Fig. 2 erkennbar ist.

Der zweite ebene Flächenbereich 54 kann senkrecht zu der parallel zur Hocherstreckungsrichtung z des Schaufelfußes 40 verlaufenden Mittelebene 16 des Schaufelfußes 40 orientiert sein, wie in Fig. 2 erkennbar ist. Der zweite ebene Flächenbereich 54 kann dadurch horizontal und vorliegend senkrecht zu einer in der Mittelebene 16 liegenden Schaufelbezugsachse verlaufen.

Fig. 3 zeigt eine Variante einer Ausgestaltung des Rotors 10 im Bereich A. Gemäß dieser Variante kann vorgesehen sein, dass die erste Begrenzungsfläche 50 den zweiten ebenen Flächenbereich 54 nicht aufweist, sodass die Erhöhung 60 einerseits unmittelbar an den verrundeten Flächenbereich 56 und andererseits unmittelbar an den ersten ebenen Flächenbereich 52 anschließen kann. Gemäß der Variante kann also der zweite ebene Flächenbereich 54 theoretisch den Wert "0" annehmen, sodass der verrundete Flächenbereich 56 mit dem Radius R1 einen stumpfen Winkel β mit dem ersten ebenen Flächenbereich 52 einschließen kann.

Fig. 3 zeigt exemplarisch, eine Kantenverrundung 62 der Erhöhung 60. Die Kantenverrundung 62 ist in Fig. 1 und Fig. 2 aus Gründen der Übersichtlichkeit nicht weiter dargestellt. Die Kantenverrundung 62 kann einen Radius R2 aufweisen, welcher kleiner sein kann als der Radius R1. Die in Fig. 3 als Ecke dargestellte Erhöhung 60 mit dem daran angrenzenden ersten ebenen Flächenbereich 52 kann also allgemein mit dem Radius R2 verrundet sein.

Durch die als Unstetigkeit, insbesondere als Knick ausgebildete Erhöhung 60 ist es möglich, für den Radius R1 einen großen Radienwert einzustellen, um dadurch beim bestimmungsgemäßen Gebrauch des Rotors 10 für geringe Kerbspannungen zu sorgen. Die Erhöhung 60 dient zur wirksamen Verengung des Spaltes 12, sodass die durch den Spalt 12 tretende Leckage trotz des großen Radienwertes gering gehalten werden kann. Auch durch die Neigung des ersten ebenen Flächenbereichs 52 zum dritten ebenen Flächenbereich 32 entsprechend dem Winkel α kann die Leckage verringert werden.

### Bezugszeichenliste:

- 10: Rotor
- 12: Spalt
- 14: Spaltabschnitt
- 16: Mittelebene
- 20: Rotorgrundkörper
- 22: Ausnehmung
- 24: Vorsprung
- 30: zweite Begrenzungsfläche
- 32: dritter ebener Flächenbereich
- 40: Schaufelfuß
- 42: Vertiefung
- 50: erste Begrenzungsfläche
- 52: erster ebener Flächenbereich
- 54: zweiter ebener Flächenbereich
- 56: verrundeter Flächenbereich
- 60: Erhöhung
- 62: Kantenverrundung
- 100: Strömungsmaschine
- R1: Radius
- R2: Radius
- x: Längserstreckungsrichtung
- y: Quererstreckungsrichtung
- z: Hocherstreckungsrichtung
- α: Winkel
- β: stumpfer Winkel

## Patentansprüche

1. Rotor (10) für eine Strömungsmaschine (100), mit zumindest einer Schaufel und mit wenigstens einem Rotorgrundkörper (20), welcher zumindest eine Ausnehmung (22) aufweist, in welcher ein Schaufelfuß (40) der zumindest einen Schaufel formschlüssig aufgenommen ist, wobei der Schaufelfuß (40) zumindest eine Vertiefung (42) umfasst, in welcher wenigstens ein, die zumindest eine Ausnehmung (22) bereichsweise begrenzender Vorsprung (24) des wenigstens einen Rotorgrundkörpers (20) aufgenommen ist, wobei die zumindest eine Vertiefung (42) durch eine schaufelfußseitige, erste Begrenzungsfläche (50) und der wenigstens eine Vorsprung (24) durch eine rotorgrundkörperseitige, zweite Begrenzungsfläche (30) begrenzt ist, wobei
die erste Begrenzungsfläche (50) wenigstens eine Erhöhung (60) aufweist, **dadurch gekennzeichnet, dass**
die Erhöhung (60) einen zwischen der ersten Begrenzungsfläche (50) und der zweiten Begrenzungsfläche (30) verlaufenden Spalt (12) zumindest bereichsweise verengt und innerhalb einer nicht-tragenden Flanke des Schaufelfußes (40) gebildet ist.

2. Rotor (10) nach Anspruch 1,
**dadurch gekennzeichnet, dass**
die wenigstens eine Erhöhung (60) unmittelbar an einen ersten ebenen Flächenbereich (52) der ersten Begrenzungsfläche (50) angrenzt und/oder die Erhöhung (60)auf eine nach radial außen weisende Flanke des Vorsprung (24) des Rotorgrundkörpers (20) weist.

3. Rotor (10) nach Anspruch 2,
**dadurch gekennzeichnet, dass**
die wenigstens eine Erhöhung (60) zwischen dem ersten ebenen Flächenbereich (52) und einem zweiten ebenen Flächenbereich (54) der ersten Begrenzungsfläche (50) angeordnet ist.

4. Rotor (10) nach Anspruch 2 oder 3,
**dadurch gekennzeichnet, dass**
die wenigstens eine Erhöhung (60) zwischen einem verrundeten Flächenbereich (56) der ersten Begrenzungsfläche (50) und dem ersten ebenen Flächenbereich (52) angeordnet ist.

5. Rotor (10) nach Anspruch 3 oder 4 ,
**dadurch gekennzeichnet, dass**
der zweite ebene Flächenbereich (54) einen Winkel (α) mit einem, der zweiten Begrenzungsfläche zugeordneten, dritten ebenen Flächenbereich (32) einschließt, wobei der dritte ebene Flächenbereich (32) zusammen mit dem ersten ebenen Flächenbereich (52) einen Spaltabschnitt (14) des Spaltes (12) begrenzt.

6. Rotor (10) nach einem der Ansprüche 3 bis 5,
**dadurch gekennzeichnet, dass**
der zweite ebene Flächenbereich (54) senkrecht zu einer parallel zu einer Hocherstreckungsrichtung (z) des Schaufelfußes verlaufenden Mittelebene (16) des Schaufelfußes (40) orientiert ist.

7. Rotor (10) nach einem der vorhergehenden Ansprüche,
**dadurch gekennzeichnet, dass**
die wenigstens eine Erhöhung (60) eine Kantenverrundung (62) aufweist.

8. Rotor (10) nach einem der vorhergehenden Ansprüche,
**dadurch gekennzeichnet, dass** im Betrieb des Rotors der Spalt innerhalb der Vertiefung einen ersten und einen zweiten Spaltabschnitt, die bei der Erhöhung (60) aneinander angrenzen, umfasst, wobei der erste Spaltabschnitt ausgehend von der Erhöhung (60) um einen Scheitel des Vorsprungs (24) herum verläuft, wobei der erste Spaltabschnitt ausgehend von der Erhöhung (60) mit einer Spaltbreite um den Scheitel des Vorsprungs (24) herum verläuft, welche Spaltbreite zunächst monoton, insbesondere streng monoton, bis zu einer lokal maximalen Spaltbreite zunimmt und dann monoton, insbesondere streng monoton, insbesondere bis auf Null, abnimmt und/oder der zweite Spaltabschnitt ausgehend von der Erhöhung (60) zumindest in einem an die Erhöhung (60) angrenzenden Bereich mit konstanter Spaltbreite, insbesondere linear, verläuft.

9. Rotor (10) nach Anspruch 8,
**dadurch gekennzeichnet, dass** die lokal maximale Spaltbreite zwischen dem Scheitel und der der Erhöhung (60) angeordnet ist.

10. Rotor (10) nach einem der vorhergehenden Ansprüche,
**dadurch gekennzeichnet, dass** Vertiefung eine radial äußerste oder zweitäußerste Vertiefung eines tannenbaumartig profilierten Schaufelfußes ist.

11. Strömungsmaschine (100) mit wenigstens einem Rotor (10) nach einem der Ansprüche 1 bis 10.

## Claims

1. Rotor (10) for a turbomachine (100), comprising at least one blade and at least one rotor main body (20) which has at least one recess (22) in which a blade root (40) of the at least one blade is accommodated in a form-fitting manner, the blade root (40) having at least one depression (42) in which at least one projection (24) of the at least one rotor main body (20) that delimits the at least one recess (22) in regions is accommodated, the at least one depression (42) being delimited by a first delimiting surface (50) on the blade root side, and the at least one projection (24) being delimited by a second delimiting surface (30) on the rotor main body side,
the first delimiting surface (50) having at least one elevation (60), **characterized in that**
the elevation (60) narrows a gap (12) extending between the first delimiting surface (50) and the second delimiting surface (30), at least in regions thereof, and is formed within a non-supporting flank of the blade root (40).

2. Rotor (10) according to claim 1,
**characterized in that**
the at least one elevation (60) directly adjoins a first planar surface region (52) of the first delimiting surface (50) and/or the elevation (60) points toward a radially outwardly pointing flank of the projection (24) of the rotor main body (20).

3. Rotor (10) according to claim 2,
**characterized in that**
the at least one elevation (60) is arranged between the first planar surface region (52) and a second planar surface region (54) of the first delimiting surface (50).

4. Rotor (10) according to claim 2 or claim 3,
**characterized in that**
the at least one elevation (60) is arranged between a rounded surface region (56) of the first delimiting surface (50) and the first planar surface region (52).

5. Rotor (10) according to claim 3 or claim 4,
**characterized in that**
the second planar surface region (54) forms an angle (α) with a third planar surface region (32) associated with the second delimiting surface, the third flat surface region (32), together with the first planar surface region (52), delimiting a gap portion (14) of the gap (12).

6. Rotor (10) according to any of claims 3 to 5,
**characterized in that**
the second planar surface region (54) is oriented perpendicularly to a central plane (16) of the blade root (40) which extends in parallel with a vertical extension direction (z) of the blade root.

7. Rotor (10) according to any of the preceding claims,
**characterized in that**
the at least one elevation (60) has an edge rounding (62).

8. Rotor (10) according to any of the preceding claims,
**characterized in that** during operation of the rotor, the gap within the depression comprises a first and a second gap portion which adjoin one another at the elevation (60), the first gap portion extending from the elevation (60) about an apex of the projection (24), the first gap portion extending from the elevation (60) about the apex of the projection (24) with a gap width which initially increases monotonically, in particular strictly monotonically, to a locally maximum gap width, and then decreases monotonically, in particular strictly monotonically, in particular to zero, and/or the second gap portion extending from the elevation (60), at least in a region adjacent to the elevation (60), with a constant gap width, in particular linearly.

9. Rotor (10) according to claim 8,
**characterized in that** the locally maximum gap width is arranged between the apex and the elevation (60).

10. Rotor (10) according to any of the preceding claims,
**characterized in that** the depression is a radially outermost or second outermost depression of a fir-tree-profiled blade root.

11. Turbomachine (100) comprising at least one rotor (10) according to any of claims 1 to 10.

## Revendications

1. Rotor (10) pour une turbomachine (100), comportant au moins une aube et comportant au moins un corps de base de rotor (20) qui présente au moins un évidement (22) dans lequel un pied d'aube (40) de l'au moins une aube est reçu par complémentarité de forme, dans lequel le pied d'aube (40) comprend au moins un renfoncement (42) dans lequel au moins une saillie (24) de l'au moins un corps de base de rotor (20), laquelle délimite l'au moins un évidement (22) dans certaines zones, est reçue, dans lequel l'au moins un renfoncement (42) est délimité par une première surface de délimitation (50) côté pied d'aube et l'au moins une saillie (24) est délimitée par une seconde surface de délimitation (30) côté corps de base de rotor, dans lequel
la première surface de délimitation (50) présente au moins une élévation (60), **caractérisé en ce que**
l'élévation (60) rétrécit au moins dans certaines zones une fente (12) s'étendant entre la première surface de délimitation (50) et la seconde surface de délimitation (30) et est formée à l'intérieur d'un flanc non porteur du pied d'aube (40).

2. Rotor (10) selon la revendication 1,
**caractérisé en ce que**
l'au moins une élévation (60) est directement adjacente à une première zone de surface plane (52) de la première surface de délimitation (50) et/ou l'élévation (60) est dirigée vers un flanc, orienté radialement vers l'extérieur, de la saillie (24) du corps de base de rotor (20).

3. Rotor (10) selon la revendication 2,
**caractérisé en ce que**
l'au moins une élévation (60) est disposée entre la première zone de surface plane (52) et une deuxième zone de surface plane (54) de la première surface de délimitation (50).

4. Rotor (10) selon la revendication 2 ou 3,
**caractérisé en ce que**
l'au moins une élévation (60) est disposée entre une zone de surface arrondie (56) de la première surface de délimitation (50) et la première zone de surface plane (52).

5. Rotor (10) selon la revendication 3 ou 4,
**caractérisé en ce que**
la deuxième zone de surface plane (54) forme un angle (α) avec une troisième zone de surface plane (32) associée à la seconde surface de délimitation, dans lequel la troisième zone de surface plane (32) délimite, conjointement avec la première zone de surface plane (52), une section de fente (14) de la fente (12).

6. Rotor (10) selon l'une des revendications 3 à 5,
**caractérisé en ce que**
la deuxième zone de surface plane (54) est orientée perpendiculairement à un plan médian (16) du pied d'aube (40) s'étendant parallèlement à une direction d'extension principale (z) du pied d'aube.

7. Rotor (10) selon l'une des revendications précédentes,
**caractérisé en ce que**
l'au moins une élévation (60) présente un arrondissement des arêtes (62).

8. Rotor (10) selon l'une des revendications précédentes,
**caractérisé en ce que,** pendant le fonctionnement du rotor, la fente comprend à l'intérieur du renfoncement une première et une seconde section de fente qui sont adjacentes l'une à l'autre au niveau de l'élévation (60), dans lequel la première section de fente s'étend à partir de l'élévation (60) autour d'un sommet de la saillie (24), dans lequel la première section de fente s'étend à partir de l'élévation (60) avec une largeur de fente autour du sommet de la saillie (24), laquelle largeur de fente augmente d'abord de manière monotone, en particulier de manière strictement monotone, jusqu'à une largeur de fente locale maximale, puis diminue de manière monotone, en particulier de manière strictement monotone, en particulier jusqu'à zéro, et/ou la seconde section de fente s'étend à partir de l'élévation (60) au moins dans une zone adjacente à l'élévation (60) avec une largeur de fente constante, en particulier de manière linéaire.

9. Rotor (10) selon la revendication 8,
**caractérisé en ce que** la largeur de fente locale maximale est disposée entre le sommet et l'élévation (60).

10. Rotor (10) selon l'une des revendications précédentes,
**caractérisé en ce que** le renfoncement est un renfoncement radialement le plus à l'extérieur ou le second le plus à l'extérieur d'un pied d'aube profilé en forme de sapin.

11. Turbomachine (100) comportant au moins un rotor (10) selon l'une des revendications 1 à 10.
